# FASCICULE DE BREVET EUROPEEN

(11) **EP 2 541 212 B1**
(45) Date de publication et mention de la délivrance du brevet: **08.10.2014**
(21) Numéro de dépôt: 12169775.9
(22) Date de dépôt: 29.05.2012
(51) Int. Cl.: G01D 5/34, G01D 3/036

(54) **Système de détection à faible consommation d'énergie**
Detektionssystem mit geringer Leistungsaufnahme
Low-power detection system

(30) Priorité: 29.06.2011 FR 1155790
(43) Date de publication de la demande: 02.01.2013
(73) Titulaire: Schneider Electric Industries SAS, 92500 Rueil-Malmaison (FR)
(72) Inventeur: Chiesi, Laurent, 38140 Reaumont (FR); Raisigel, Hynek, 38360 Sassenage (FR); Chabanis, Gilles, 92506 Rueil Malmaison cedex (FR)
(74) Mandataire: Bié, Nicolas

(56) Documents cités:
- US-A- 5 165 380
- US-B1- 6 356 774
- US-B1- 6 574 425

## Description

### Domaine technique de l'invention

La présente invention se rapporte à un système de détection comportant un émetteur apte à émettre un signal lumineux, un récepteur du signal lumineux et des moyens de traitement. L'invention sera notamment parfaitement adaptée pour la détermination de la concentration d'un gaz de type dioxyde de carbone.

### Etat de la technique

Lorsqu'un système de détection emploie une diode électroluminescente comme émetteur, il est connu qu'il doit comporter des moyens permettant de limiter ou de compenser l'effet de la température sur le signal lumineux émis par la diode électroluminescente. En règle générale, ces moyens permettent de faire varier le niveau de courant injecté dans la diode électroluminescente afin de maintenir sa puissance optique à une valeur à peu près constante quelle que soit la température de la diode électroluminescente. En nécessitant une action permanente sur le courant injecté dans la diode électroluminescente, ces solutions ne vont pas dans le sens d'une faible consommation d'énergie.

Le document US 6 574 425 B1 montre un réflectomètre dans lequel une diode électroluminescente est alimentée avec un courant pulsé pour émettre un signal lumineux. Un récepteur capte le signal lumineux réfléchi et génère un premier signal d'entrée correspondant. Des moyens de mesure génèrent un second signal d'entrée représentatif de la température de la diode électroluminescente. En fonction des deux signaux d'entrée un signal de sortie est déterminé.

Le but de l'invention est de proposer un système de détection permettant de compenser une partie de l'effet lié à la température sur la détection effectuée tout en présentant une faible consommation d'énergie et en ne dégradant pas le rapport signal-bruit.

### Exposé de l'invention

Ce but est atteint par un système de détection comportant :
- un émetteur comprenant une diode électroluminescente apte à émettre un signal lumineux et une source d'alimentation agencée pour alimenter la diode électroluminescente,
- un récepteur destiné à capter le signal lumineux émis par la diode électroluminescente et agencé pour générer un premier signal d'entrée représentatif du signal lumineux détecté,
- des moyens de traitement connectés au récepteur pour fournir un signal de sortie,
le système étant **caractérisé en ce** que :
- la source d'alimentation est une source de tension agencée pour appliquer une tension constante à la diode électroluminescente,
- le système comporte des moyens de mesure du courant traversant la diode électroluminescente et destinés à générer un second signal d'entrée représentatif du courant mesuré,
- les moyens de traitement comportent des moyens de détermination du signal de sortie en fonction du premier signal d'entrée et du second signal d'entrée.

Selon une particularité, les moyens de traitement comportent un microcontrôleur mémorisant des paramètres de calibration en température employés pour déterminer le signal de sortie à partir du premier signal d'entrée et du second signal d'entrée.

Selon une autre particularité, les moyens de mesure comportent une résistance de mesure connectée en série avec la diode électroluminescente.

Selon une autre particularité, le récepteur comporte une photodiode et un amplificateur de courant configurés pour générer le premier signal d'entrée.

### Brève description des figures

D'autres caractéristiques et avantages vont apparaître dans la description détaillée qui suit faite en regard des dessins annexés dans lesquels :
- la figure 1 représente le schéma de principe du système de détection de l'invention,
- la figure 2 représente la courbe d'augmentation du courant traversant la diode électroluminescente (en %) en fonction de la température (Temp) mesurée (en °C).

### Description détaillée d'au moins un mode de réalisation

L'invention concerne un système de détection destiné notamment à la détermination de la concentration d'un gaz, tel que par exemple le dioxyde de carbone. Le système de détection de l'invention présente l'avantage de consommer très peu d'énergie lors de chaque mesure et de ne pas dégrader le rapport signal-bruit.

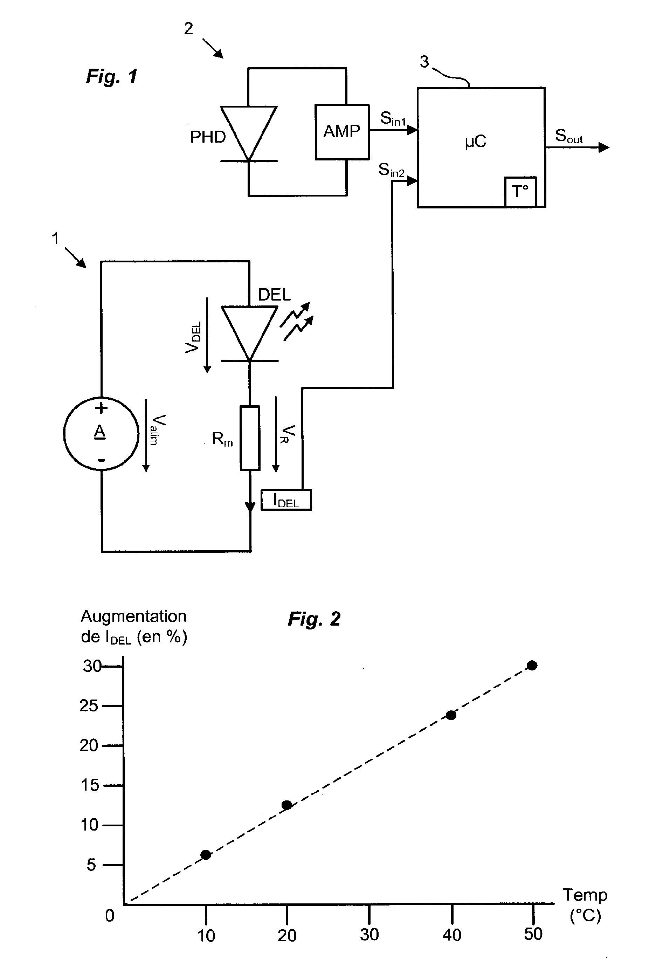

En référence à la figure 1, le système de détection de l'invention comporte un émetteur 1 comprenant une diode électroluminescente (DEL) apte à émettre un signal lumineux et une source d'alimentation A à laquelle est connectée la diode électroluminescente DEL. La source d'alimentation A est constituée d'une source de tension délivrant une tension Vₐₗᵢₘ constante afin de pouvoir appliquer une tension V_{DEL} constante à la diode électroluminescente DEL. Avec une tension V_{DEL} constante aux bornes de la diode électroluminescente DEL, le courant I_{DEL} qui traverse la diode évolue sensiblement avec la température car la tension directe de polarisation de la diode électroluminescente DEL varie inversement avec la température. En conséquence, à tension constante, le courant qui traverse la diode électroluminescente DEL augmente de manière quasi linéaire lorsque la température augmente. La courbe représentée en figure 2 permet d'illustrer ce phénomène.

Le système de détection de l'invention comporte également un récepteur 2 éloigné par rapport à l'émetteur 1 et comportant par exemple une photodiode (PHD) destinée à capter les signaux lumineux émis par l'émetteur 1 et un amplificateur de courant AMP permettant de transformer le courant électrique généré grâce à la photodiode PHD en un premier signal d'entrée Sᵢₙ₁ exploitable en aval par des moyens de traitement 3. Le gaz à détecter est typiquement placé entre l'émetteur 1 et le récepteur 2.

Comme la diode électroluminescente DEL est alimentée par une source de tension constante, le système de détection comporte également des moyens de mesure du courant I_{DEL} traversant la diode électroluminescente DEL. La variation du courant I_{DEL} mesuré est représentative de la variation de la température influençant la puissance optique de la diode électroluminescente DEL. Les moyens de mesure comportent par exemple une résistance de mesure Rₘ connectée en série avec la diode électroluminescente DEL, dont la tension V_{R} est surveillée par les moyens de traitement 3 en vue d'en déduire le courant I_{DEL} traversant la diode électroluminescente DEL. Sur la figure 1, le courant I_{DEL} est représenté par un second signal d'entrée Sᵢₙ₂ appliqué aux moyens de traitement 3.

Le premier signal d'entrée Sᵢₙ₁ et le second signal d'entrée Sᵢₙ₂ sont par exemple transformés en signaux numériques par des convertisseurs analogiques-numériques implémentés dans les moyens de traitement 3. Les moyens de traitement 3 comportent un microcontrôleur µC destiné à traiter les deux signaux numériques obtenus pour déterminer un signal de sortie Sₒᵤₜ représentatif de l'état de la détection. Le traitement consiste à déterminer une tension de sortie, correspondant à la concentration du gaz à mesurer, à partir du premier signal d'entrée Sᵢₙ₁, du second signal d'entrée Sᵢₙ₂ et de paramètres de calibration en température (T°) initialement mémorisés dans le microcontrôleur µC. Ces paramètres de calibration T° sont par exemple stockés dans une mémoire du microcontrôleur µC et sont appliqués au second signal d'entrée Sᵢₙ₂ pour tenir compte de l'influence de la température dans la détermination du signal de sortie Sₒᵤₜ.

Par ailleurs, comme la diode électroluminescente DEL est alimentée en tension, lorsque la température augmente, la puissance optique de la diode DEL à courant constant diminue et donc le rapport signal-bruit SNR diminue. Or, lorsque la diode DEL est alimentée par une tension constante, son courant augmente lorsque la température augmente. En conséquence, la perte de puissance optique est limitée ainsi que la dégradation du rapport signal-bruit SNR.

## Revendications

1. Système de détection comportant :
- un émetteur (1) comprenant une diode électroluminescente (DEL) apte à émettre un signal lumineux et une source d'alimentation (A) agencée pour alimenter la diode électroluminescente (DEL),
- un récepteur (2) destiné à capter le signal lumineux émis par la diode électroluminescente et agencé pour générer un premier signal d'entrée (Sᵢₙ₁) représentatif du signal lumineux détecté,
- des moyens de traitement (3) connectés au récepteur (2) pour fournir un signal de sortie (Sₒᵤₜ),
le système étant **caractérisé en ce que** :
- la source d'alimentation (A) est une source de tension agencée pour appliquer une tension constante (V_{DEL}) à la diode électroluminescente (DEL),
- le système comporte des moyens de mesure du courant (I_{DEL}) traversant la diode électroluminescente (DEL) et destinés à générer un second signal d'entrée (Sᵢₙ₂) représentatif du courant (I_{DEL}) mesuré,
- les moyens de traitement (3) comportent des moyens de détermination du signal de sortie (Sₒᵤₜ) en fonction du premier signal d'entrée (Sᵢₙ₁) et du second signal d'entrée (Sᵢₙ₂).

2. Système de détection selon la revendication 1, **caractérisé en ce que** les moyens de traitement (3) comportent un microcontrôleur (µC) mémorisant des paramètres (T°) de calibration en température employés pour déterminer le signal de sortie (Sₒᵤₜ) à partir du premier signal d'entrée (Sᵢₙ₁) et du second signal d'entrée (Sᵢₙ₂).

3. Système de détection selon la revendication 1, **caractérisé en ce que** les moyens de mesure comportent une résistance de mesure (Rₘ) connectée en série avec la diode électroluminescente (DEL).

4. Système de détection selon la revendication 1, **caractérisé en ce que** le récepteur (2) comporte une photodiode (PHD) et un amplificateur de courant (AMP) configurés pour générer le premier signal d'entrée (Sᵢₙ₁).

## Patentansprüche

1. Detektionssystem, das Folgendes umfasst:
- einen Sender (1), der eine Elektrolumineszenzdiode (DEL), die ein Lichtsignal aussenden kann, und eine Versorgungsquelle (A), die dafür ausgelegt ist, die Elektrolumineszenzdiode (DEL) zu versorgen, enthält,
- einen Empfänger (2), der dazu bestimmt ist, das von der Elektrolumineszenzdiode ausgesendete Lichtsignal zu empfangen, und dazu ausgelegt ist, ein erstes Eingangssignal (Sᵢₙ₁), das das detektierte Lichtsignal repräsentiert, zu erzeugen,
- Verarbeitungsmittel (3), die mit dem Empfänger (2) verbunden sind, um ein Ausgangssignal (Sₒᵤₜ) zu liefern,
wobei das System **dadurch gekennzeichnet ist, dass**:
- die Versorgungsquelle (A) eine Spannungsquelle ist, die dafür ausgelegt ist, an die Elektrolumineszenzdiode (DEL) eine konstante Spannung (V_{DEL}) anzulegen,
- das System Mittel zum Messen des durch die Elektrolumineszenzdiode (DEL) fließenden Stroms (I_{DEL}) enthält, die dazu bestimmt sind, ein zweites Eingangssignal (Sᵢₙ₂), das den gemessenen Strom (I_{DEL}) repräsentiert, zu erzeugen, und
- die Verarbeitungsmittel (3) Mittel zum Bestimmen des Ausgangssignals (Sₒᵤₜ) als Funktion des ersten Eingangssignals (Sᵢₙ₁) und des zweiten Eingangssignals (Sᵢₙ₂) enthalten.

2. Detektionssystem nach Anspruch 1, **dadurch gekennzeichnet, dass** die Verarbeitungsmittel (3) einen Mikrocontroller (µC) enthalten, der Temperaturkalibrierungsparameter (T°) speichert, die verwendet werden, um das Ausgangssignal (Sₒᵤₜ) anhand des ersten Eingangssignals (Sᵢₙ₁) und des zweiten Eingangssignals (Sᵢₙ₂) zu bestimmen.

3. Detektionssystem nach Anspruch 1, **dadurch gekennzeichnet, dass** die Messmittel einen Messwiderstand (Rₘ) enthalten, der mit der Elektrolumineszenzdiode (DEL) in Reihe geschaltet ist.

4. Detektionssystem nach Anspruch 1, **dadurch gekennzeichnet, dass** der Empfänger (2) eine Photodiode (PHD) und einen Stromverstärker (AMP), die konfiguriert sind, um das erste Eingangssignal (Sᵢₙ₁) zu erzeugen, enthält.

## Claims

1. Detection system comprising:
- an emitter (1) comprising a light-emitting diode (DEL) able to emit a luminous signal and a power supply source (A) designed to power the light-emitting diode (DEL),
- a receiver (2) intended to sense the luminous signal emitted by the light-emitting diode and designed to generate a first input signal (Sᵢₙ₁) representative of the luminous signal detected,
- processing means (3) connected to the receiver (2) to provide an output signal (Sₒᵤₜ),
the system being **characterized in that**:
- the power supply source (A) is a voltage source designed to apply a constant voltage (V_{DEL}) to the light-emitting diode (DEL),
- the system comprises means for measuring the current (I_{DEL}) passing through the light-emitting diode (DEL) and intended to generate a second input signal (Sᵢₙ₂) representative of the current (I_{DEL}) measured,
- the processing means (3) comprise means for determining the output signal (Sₒᵤₜ) as a function of the first input signal (Sᵢₙ₁) and of the second input signal (Sᵢₙ₂).

2. Detection system according to Claim 1, **characterized in that** the processing means (3) comprise a microcontroller (µC) storing temperature calibration parameters (T°) employed to determine the output signal (Sₒᵤₜ) on the basis of the first input signal (Sᵢₙ₁) and of the second input signal (Sᵢₙ₂).

3. Detection system according to Claim 1, **characterized in that** the measurement means comprise a measurement resistor (Rₘ) connected in series with the light-emitting diode (DEL).

4. Detection system according to Claim 1, **characterized in that** the receiver (2) comprises a photodiode (PHD) and a current amplifier (AMP) which are configured to generate the first input signal (Sᵢₙ₁).
